# EUROPÄISCHE PATENTSCHRIFT

(11) **EP 3 753 393 B1**
(45) Veröffentlichungstag und Bekanntmachung des Hinweises auf die Patenterteilung: **16.11.2022**
(21) Anmeldenummer: 20161717.2
(22) Anmeldetag: 09.03.2020
(51) Int. Cl.: A01F 12/44

(54) **SELBSTFAHRENDER MÄHDRESCHER**
SELF-PROPELLED COMBINE HARVESTER
MOISSONNEUSE-BATTEUSE AUTOMOTRICE

(30) Priorität: 18.06.2019 DE 102019116507
(43) Veröffentlichungstag der Anmeldung: 23.12.2020
(73) Patentinhaber: CLAAS Selbstfahrende Erntemaschinen GmbH, 33428 Harsewinkel (DE)
(72) Erfinder: Schwarz, Michael, 33378 Rheda-Wiedenbrück (DE); Diekamp, Andreas, 49176 Hilter (DE); Vieregge, Christopher, 32694 Dörentrup (DE)
(74) Vertreter: CLAAS Gruppe

(56) Entgegenhaltungen:
- DE-A1- 2 620 875
- DE-A1- 19 624 733
- DE-B1- 1 927 262
- DE-U1- 8 221 573

## Beschreibung

Die vorliegende Erfindung betrifft einen selbstfahrenden Mähdrescher gemäß dem Oberbegriff des Anspruches 1.

Selbstfahrende Mähdrescher der eingangs genannten Art umfassen eine Dreschvorrichtung, eine Abscheidevorrichtung, welche jeweils einen Erntegutstrom abscheiden, der auf einen unterhalb von Dreschvorrichtung und Abscheidevorrichtung liegenden Vorbereitungsboden gelangt, sowie eine Reinigungsvorrichtung mit zumindest einer dem Vorbereitungsboden nachgeordneten und unterhalb des Vorbereitungsbodens liegenden Siebebene, wobei der Reinigungsvorrichtung eine Gebläseanordnung zugeordnet ist. Ein von der Dreschvorrichtung abgeschiedener Erntegutstrom gelangt unmittelbar auf den Vorbereitungsboden, während ein von der Abscheidevorrichtung abgeschiedener Erntegutstrom zunächst einem Rücklaufboden zugeführt wird, welcher den Erntegutstrom an den Vorbereitungsboden übergibt. Vom Vorbereitungsboden gelangt der Erntegutstrom zur Reinigungsvorrichtung, wo dieser durch eine Kombination von Windsichten und Sieben aufbereitet wird, um Korn von Nichtkornbestandteilen, wie Spreu, Kurzstroh oder dergleichen, zu trennen. Die Leistungsfähigkeit von Mähdreschern wird unter anderem durch die Leistungsfähigkeit der Reinigungsvorrichtung begrenzt, da diese den abgeschiedenen Erntegutstrom in Korn und Nichtkornbestandteile auftrennt, wobei Kornverluste durch einen Austrag mit den Nichtkornbestandteilen möglichst gering gehalten werden sollen.

Ein selbstfahrender Mähdrescher der eingangs genannten Art ist aus der WO 2015/000787 A1 bekannt. Der Mähdrescher weist eine Reinigungsvorrichtung mit einem dieser vorgelagerten Reinigungsdruckgebläse auf, welches der Erzeugung eines gerichteten Luftstroms zur Durchströmung der mindestens einen Siebebene der Reinigungsvorrichtung dient. Ein der Reinigungsvorrichtung vorgelagerter oszillierend angetriebener Vorbereitungsboden führt dieser einen zu reinigenden Erntegutstrom zu. Um den Transport von Erntegut durch den Vorbereitungsboden zu verbessern, sieht die WO 2015/000787 A1 vor, dass dem Vorbereitungsboden eine mit Öffnungen versehene, nach unten geneigte Platte nachgeordnet ist, auf welcher zueinander beabstandet Lamellen unter einem Winkel zur Oberfläche der Platte angeordnet sind, und dass unterhalb des Vorbereitungsbodens zumindest ein zusätzliches Druckgebläse angeordnet ist, welches unabhängig von dem Reinigungsdruckgebläse angesteuert wird, um die Öffnungen zwischen den Lamellen der Platte mit einem Luftstrom zu durchströmen. Der Mähdrescher gemäß der WO 2015/000787 A1 weist den Nachteil auf, dass die vorgeschlagene Ausführung von Vorbereitungsboden mit der diesem nachgeordneten Platte den vorhandenen Bauund Prozessraum im Inneren des Mähdreschers stark einschränkt, was sich auf andere Komponenten des Mähdreschers, die in diesem Bereich angeordnet sind, nachteilig auswirken kann.

Aus der DE 82 21 573 U1 ist ebenfalls ein Mähdrescher der eingangs genannten Art bekannt, welcher einen mehrstufig ausgeführten Vorbereitungsboden aufweist, wobei die sich ausbildenden Fallstufen zweier aufeinanderfolgender Stufen des Vorbereitungsbodens von einem Luftstrom durchströmt werden, der durch ein unterhalb des Vorbereitungsbodens angeordnetes Druckgebläse erzeugt wird. Aufgrund des relativ großen Abstandes zwischen den Stufen besteht die Gefahr, dass ein Teil des Erntegutes durch das Fallen durch die Fallstufe verloren geht. Trotz des auf die Fallstufen gerichteten Luftstroms kann sich ein Teil des Erntegutes anfänglich in Rückwärtsrichtung bewegen, wenn es von einer Stufe auf die nächste fällt, insbesondere wenn die Vorbereitungsbodenstufen oszillierend angetrieben sind. Dies kann zu erheblichen Verlusten führen.

Somit liegt der vorliegenden Erfindung die Aufgabe zugrunde, einen selbstfahrenden Mähdrescher der eingangs genannten Art weiterzubilden, der sich durch eine höhere Leistungsfähigkeit auszeichnet.

Die Aufgabe wird durch einen selbstfahrenden Mähdrescher mit den Merkmalen des Anspruches 1 gelöst. Vorteilhafte Weiterbildungen sind Gegenstand der von dem Anspruch 1 abhängigen Unteransprüche.

Gemäß dem Anspruch 1 wird ein selbstfahrender Mähdrescher vorgeschlagen, umfassend eine Dreschvorrichtung, eine Abscheidevorrichtung, welche jeweils einen Erntegutstrom abscheiden, der auf einen Vorbereitungsboden gelangt, sowie eine Reinigungsvorrichtung mit zumindest einer dem Vorbereitungsboden nachgeordneten und unterhalb des Vorbereitungsbodens liegenden Siebebene, wobei der Reinigungsvorrichtung eine Gebläseanordnung zugeordnet ist, wobei der Vorbereitungsboden in mehrere, vertikal versetzt angeordnete Abschnitte unterteilt ist, wobei sich zwischen zwei aufeinanderfolgenden Abschnitten des Vorbereitungsbodens eine vertikale Fallstufe ausbildet, die jeweils von einem von einer als Sauggebläseanordnung ausgeführten Gebläseanordnung, die der Reinigungsvorrichtung nachgeordnet ist, generierten Luftstrom aufwärtsgerichtet durchströmt werden. Durch die mehrstufige Ausgestaltung des oszillierend angetriebenen Vorbereitungsbodens in Verbindung mit einer Sauggebläseanordnung wird eine Vergrößerung des Vorbereitungsbodens beim Fördern des darauf befindlichen Ernteguts in einer von einem Anfangsbereich zu einem Endbereich des Vorbereitungsbodens verlaufenden Förderrichtung bewirkt. Es wird eine Vergrößerung des Prozessraumes der Reinigung erzielt. Zudem erfolgt die mechanische und pneumatische Anregung des Erntegutes zur Trennung des Korns von den Nichtkornbestandteilen gegenüber dem Stand der Technik zu einem früheren Zeitpunkt auf dem Vorbereitungsboden. Hierdurch wird eine Leistungssteigerung des Mähdreschers erreicht, da die Reinigungsvorrichtung dadurch eine deutliche Entlastung erfährt. Die von der Sauggebläseanordnung erzeugte Sogwirkung trägt im Bereich der jeweiligen Fallstufe zu einer Verbesserung der Entmischung bei als dies bei dem durch die Druckgebläse erzeugten kanalisierten Druckwind der Fall ist.

Insbesondere kann der Vorbereitungsboden in zumindest drei hintereinander angeordnete Abschnitte unterteilt sein, wobei sich zwischen einem ersten Abschnitt und einem tiefer angeordneten zweiten Abschnitt eine erste vertikale Fallstufe und zwischen dem zweiten Abschnitt und einem tiefer angeordneten dritten Abschnitt eine zweite vertikale Fallstufe ausbilden. Durch den Übergang von dem dritten Abschnitt zu der Siebebene der Reinigungsvorrichtung, insbesondere einem Obersieb, bilden sich somit zumindest drei Fallstufen aus, was zu einer signifikanten Steigerung der Entmischung von Korn und Nichtkornbestandteilen während des Förderns vom Vorbereitungsboden zur Reinigungsvorrichtung führt. Die Oberflächen der jeweiligen Abschnitte des Vorbereitungsbodens weisen bevorzugt eine stufenförmige oder kaskadenförmige Oberflächenstruktur auf.

Bevorzugt kann die erste vertikale Fallstufe im Übergabebereich eines unterhalb der Abscheidevorrichtung und oberhalb des Vorbereitungsbodens angeordneten Rücklaufbodens angeordnet sein. Insbesondere wird durch die erste vertikale Fallstufe der von dem Rücklaufboden über den als Rücklaufbodenfallstufe ausgebildete Übergabebereich optimal mit Luft beaufschlagt und durchströmt, wodurch bereits hier eine erste Entmischung des von dem Rücklaufboden kommenden Erntegutstroms erreicht wird.

Weiterhin kann zumindest ein Abschnitt des Vorbereitungsbodens mit Durchgangsöffnungen versehen sein. Das Anordnen von Durchgangsöffnungen in zumindest einem Abschnitt des Vorbereitungsbodens trägt zusätzlich zu einer verbesserten Entmischung während des Förderns des Erntegutes durch den oszillierend angetriebenen Vorbereitungsboden bei.

Hierbei sollten die Durchgangsöffnungen eine Öffnungsweite aufweisen, welche einen Durchtritt von Erntegut verhindert. Auf diese Weise wird etwaigen Kornverlusten vorgebeugt.

Alternativ können die Durchgangsöffnungen durch eine labyrinthartige Anordnung von die Durchgangsöffnungen begrenzenden Wandabschnitten des zumindest einen Abschnitts des Vorbereitungsbodens ausgebildet sein. Dies kann beispielsweise durch eine abschnittsweise überlappende Anordnung zweier hintereinander angeordneter Wandabschnitte erreicht werden, die sich in Längsrichtung des zumindest einen mit Durchgangsöffnungen versehenen Abschnitts des Vorbereitungsbodens erstrecken. Dabei können ein Endbereich eines oberen Wandabschnitts und ein Anfangsbereich eines unteren Wandabschnitts vertikal beabstandet zueinander angeordnet sein, wobei sich zwischen diesen eine spaltförmige oder schlitzförmige Durchgangsöffnung ausbildet, die sich quer zur Förderrichtung über die Breite des Vorbereitungsbodens erstrecken.

Bevorzugt kann ein Längenverhältnis der Erstreckung des ersten Abschnitts zum zweiten Abschnitt in Längsrichtung des Vorbereitungsbodens, zwischen denen sich eine vertikale Fallstufe ausbildet, im Bereich zwischen 0,4 und 0,7 liegen.

Insbesondere kann ein Längenverhältnis der vertikalen Erstreckung der ersten Fallstufe zu der zweiten Fallstufe im Bereich zwischen 0,4 und 0,6 liegen. Dabei nimmt die Höhe der jeweiligen Fallstufe in Längsrichtung des Vorbereitungsbodens zu. Durch die Variation der vertikalen Erstreckung der Fallstufen verändert sich der Öffnungsquerschnitt, durch den die Sauggebläseanordnung Luft ansaugen kann. Somit ändert sich auch der jeweilige Luftvolumenstrom, der beim Passieren der jeweiligen Fallstufe auf das Erntegut einwirkt.

Des Weiteren kann der zweite Abschnitt unter einem Winkel zur Längsachse des ersten Abschnitts geneigt angeordnet sein, wobei der Winkel gleich oder kleiner Null Grad (0°) ist. Dabei bedeuten ein Winkel von Null Grad (0°) eine zur Längsachse des ersten Abschnitts achsparallele Anordnung des zweiten Abschnitts und ein Winkel kleiner Null Grad (0°) eine Anordnung, bei welcher der zweite Abschnitt in Längsrichtung des Vorbereitungsbodens abfallend angeordnet ist. Eine in Längsrichtung abfallende Anordnung des zweiten Abschnitts ist insbesondere dann vorteilhaft, wenn die Durchgangsöffnungen durch die labyrinthartige Ausgestaltung der die Durchgangsöffnungen begrenzenden Wandabschnitten des zumindest einen Abschnitts des Vorbereitungsbodens ausgebildet sind.

Insbesondere ist der zweite Abschnitt den ersten Abschnitt im Übergabebereich der ersten vertikalen Fallstufe abschnittsweise überlappend angeordnet. Hierdurch werden Kornverluste vermieden.

Bevorzugt kann unterhalb der Abscheidevorrichtung ein im Wesentlichen parallel zu der Abscheidevorrichtung verlaufender Rücklaufboden angeordnet sein, der an seinem dem Vorbereitungsboden zugewandten Ende unter einem Winkel größer 0° zur Längsachse der Abscheidevorrichtung geneigt ist. Dadurch stellt sich im Bereich der Rücklaufbodenfallstufe eine Übergabe des Erntegutes an den Vorbereitungsboden unter einem stumpfen Abgabewinkel ein.

Insbesondere kann die Dreschvorrichtung nach dem Tangentialflussprinzip arbeiten und die Abscheidevorrichtung als ein Hordenschüttler oder als zumindest ein nach dem Axialflussprinzip arbeitender Axialtrennrotor ausgebildet sein.

Weiterhin kann die Dreschvorrichtung und die Abscheidevorrichtung als zumindest ein nach dem Axialflussprinzip arbeitender Axialdresch-Trennrotor ausgebildet sein.

Die vorliegende Erfindung wird nachstehend anhand von in den Zeichnungen dargestellten Ausführungsbeispielen näher erläutert.

Es zeigen:
- Fig. 1: eine schematische Darstellung eines Mähdreschers in einer Teilansicht;
- Fig. 2: in Ansicht (A) eine schematische Darstellung einer perspektivischen Ansicht eines Vorbereitungsbodens gemäß einer ersten Ausführungsform und in Ansicht (B) schematisch eine Seitenansicht von Abschnitten des Vorbereitungsbodens gemäß Ansicht (A);
- Fig. 3: schematisch eine Seitenansicht von Abschnitten des Vorbereitungsbodens in einer ersten Anordnung gemäß Ansicht (A) sowie in einer zweiten Anordnung gemäß Ansicht (B); und
- Fig. 4: in Ansicht (A) eine schematische Darstellung einer perspektivischen Ansicht eines Vorbereitungsbodens gemäß einer zweiten Ausführungsform und in Ansicht (B) schematisch eine Seitenansicht eines Abschnitts des Vorbereitungsbodens gemäß Ansicht (A).

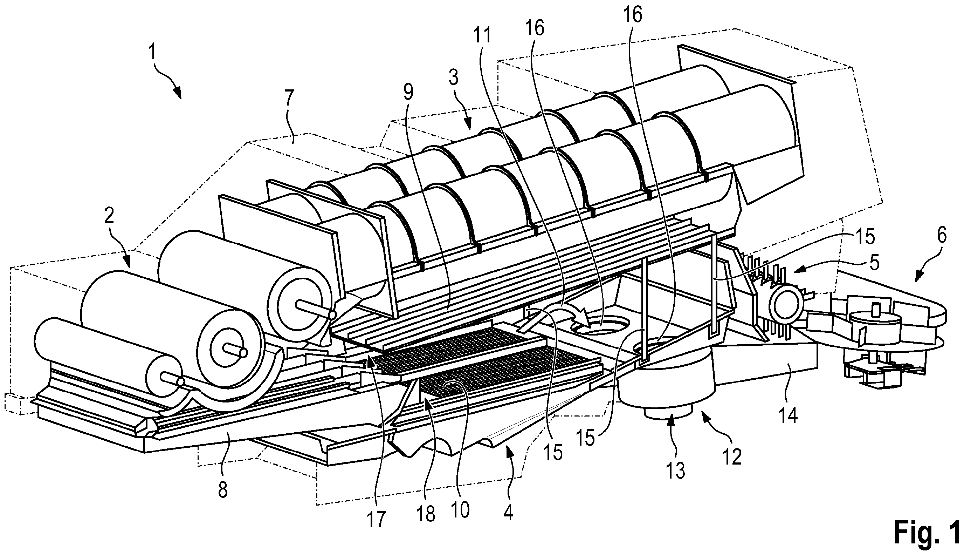

In Fig. 1 ist eine schematische Darstellung eines Mähdreschers 1 in einer Teilansicht gezeigt. Der Mähdrescher 1 umfasst eine Dreschvorrichtung 2, die als ein Mehrtrommeldreschwerk ausgeführt ist, eine Abscheidevorrichtung 3, die im dargestellten Ausführungsbeispiel als nach dem Axialflussprinzip arbeitende Trennrotoren ausgeführt ist, eine Reinigungsvorrichtung 4, eine Häckselvorrichtung 5 sowie eine Verteilvorrichtung 6, die als Radialverteiler ausgeführt ist. Die Dreschvorrichtung 2, die Abscheidevorrichtung 3, die Reinigungsvorrichtung 4 sowie die Häckselvorrichtung 5 sind von einem Maschinengehäuse 7 umgeben. Unterhalb der Dreschvorrichtung 2 ist ein oszillierend angetriebener Vorbereitungsboden 8 angeordnet. Unterhalb der Abscheidevorrichtung 3 ist ein ebenfalls oszillierend angetriebener Rücklaufboden 9 angeordnet, der im Wesentlichen parallel zu der Abscheidevorrichtung 3 verläuft. Die Reinigungsvorrichtung 4 umfasst zumindest ein Obersieb 10 und ein Untersieb. Der Vorbereitungsboden 8 liegt oberhalb der Siebenebene der Reinigungsvorrichtung 4, hier des Obersiebes 10. Der Reinigungsvorrichtung 4 ist eine Sauggebläseanordnung 12 nachgeordnet, die als Reinigungsgebläse dient. Die Sauggebläseanordnung 12 weist zumindest ein Gehäuse 13 auf, in welchem zumindest ein Läufer um eine vertikale Achse rotieren, um einen Saugluftstrom 11 aus einem vorderen Bereich des Mähdreschers 1 anzusaugen. Der Saugluftstrom 11 durchströmt dabei unter anderem das Obersieb 10 und das Untersieb der Reinigungsvorrichtung 4. An das zumindest eine Gehäuse 13 schließt sich ein Kanalsegment 14 an, welches die Sauggebläseanordnung 12 mit der Verteilvorrichtung 6 verbindet. Die Sauggebläseanordnung 12 saugt einen Luft- und Gutstrom, der im Wesentlichen im Bereich der Dreschvorrichtung 2 sowie der Reinigungsvorrichtung 4 als auch unterhalb des Vorbereitungsbodens 8 zugeführt wird, an und leitet diesen nach dem Um- und Durchströmen des Vorbereitungsbodens 8 und der Reinigungsvorrichtung 4 durch das Kanalsegment 14 an die Verteilvorrichtung 6 weiter.

Wie in der Darstellung in Fig. 1 angedeutet, bildet sich zwischen dem Rücklaufboden 9 und dem Vorbereitungsboden 8 eine Fallstufe aus, die nachfolgend als Rücklaufbodenfallstufe 17 bezeichnet wird. Der Rücklaufboden 9 ist an seinem dem Vorbereitungsboden 8 zugewandten Ende unter einem Winkel größer 0° zur Längsachse der Abscheidevorrichtung 3 geneigt. Des Weiteren bildet sich zwischen dem Vorbereitungsboden 8 und der Siebebene der Reinigungsvorrichtung 4, hier des Obersiebs 10, eine Fallstufe aus, die nachfolgend als Reinigungsfallstufe 18 bezeichnet wird.

Das zumindest eine Gehäuse 13 der Sauggebläseanordnung 12 ist mittels einer Hebelanordnung 15 aus ihrer Betriebsposition, in der die Übergabe des von der Sauggebläseanordnung 12 bereitgestellten Luft- und Gutstroms an die Verteilvorrichtung 6 erfolgt, in eine Transportposition überführbar sein, in welcher sich die Sauggebläseanordnung 12 in einer Position unterhalb der Abscheidevorrichtung 3 und oberhalb der Reinigungsvorrichtung 4 befindet. Die Sauggebläseanordnung 12 weist zwei Eintrittsöffnungen 16 auf. Die Sauggebläseanordnung 12 kann alternativ aus einer Anordnung von zwei oder mehr um eine horizontale Achse rotierender Läufer bestehen,

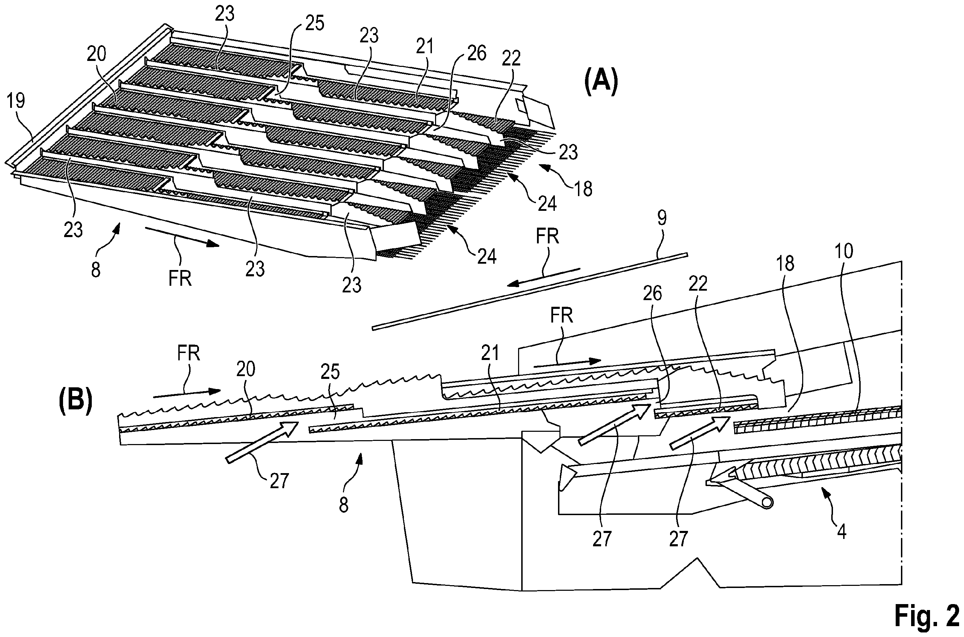

In Fig. 2 ist in Ansicht (A) eine schematische Darstellung einer perspektivischen Ansicht des Vorbereitungsbodens 8 gemäß einer ersten Ausführungsform und in Ansicht (B) schematisch eine Seitenansicht des Vorbereitungsbodens 8 gemäß Ansicht (A) gezeigt, welcher zumindest drei Abschnitte 20, 21, 22 aufweist. Die nachfolgend als erster Abschnitt 20, als zweiter Abschnitt 21 und als dritter Abschnitt 21 bezeichneten Abschnitte des Vorbereitungsbodens 8 sind in einem Rahmen 19 angeordnet. Die Abschnitte 20, 21, 22 erstrecken sich in Längsrichtung des Vorbereitungsbodens 8, was zugleich auch einer Förderrichtung FR des darauf befindlichen Erntegutes entspricht. Jeder Abschnitt 20, 21,22 ist durch sich parallel zur Förderrichtung erstreckende Leitbleche 23 in mehrere nebeneinander angeordnete Teilabschnitt unterteilt.

Der erste Abschnitt 20 des Vorbereitungsbodens 8 erstreckt sich abschnittsweise unterhalb der Dreschvorrichtung 2 und nimmt einen von der Dreschvorrichtung 2 abgeschiedenen Erntegutstrom, der aus Korn und Nichtkornbestandteilen wie Spreu besteht, auf. An den ersten Abschnitt 20 schließt sich der zweite, tiefer liegende Abschnitt 21 an, welcher vertikal versetzt zu diesem angeordnet ist. Zwischen dem ersten Abschnitt 20 und dem unterhalb des ersten Abschnitts 20 angeordneten zweiten Abschnitt 21 bildet sich eine erste vertikale Fallstufe 25 aus. Der erste Abschnitt 20 und der zweite Abschnitt 21 weisen dabei in Längsrichtung des Vorbereitungsbodens 8 eine im Wesentlichen parallele Anordnung zueinander auf. Dabei sind der erste Abschnitt 20 und der zweite Abschnitt 21 in Längsrichtung des Vorbereitungsbodens 8 gesehen einander abschnittsweise überlappend angeordnet. Auf diese Weise werden Erntegutverluste beim Übergang von dem ersten Abschnitt 20 auf den zweiten Abschnitt 21 vermieden.

Zwischen dem zweiten Abschnitt 21 und dem dritten Abschnitt 22 bildet sich eine zweite vertikale Fallstufe 26 aus. An den dritten Abschnitt 22 schließen sich rechenförmige Elemente 24 an. Zwischen dem dritten Abschnitt 22 und der nachfolgenden Siebebene des Obersiebs 10 bildet sich die dritte, als Reinigungsfallstufe bezeichnete, vertikale Fallstufe 18 aus. Die Oberflächen der jeweiligen Abschnitte 20, 21 und 22 des Vorbereitungsbodens 8 sind strukturiert ausgeführt. Insbesondere die Ansicht (B) in Fig. 2 veranschaulicht, dass der zweite Abschnitt 21 eine wellenförmige oder treppenförmige Oberflächenstruktur aufweist. Der Querschnitt der Oberflächenstruktur kann im Wesentlichen dreieckförmig ausgeführt sein.

Die erste vertikale Fallstufe 25 ist bevorzugt im Übergabebereich des unterhalb der Abscheidevorrichtung 3 und oberhalb des Vorbereitungsbodens 8 angeordneten Rücklaufbodens 9 angeordnet. Der von der Abscheidevorrichtung 3 an den Rücklaufboden 9 abgegebene Erntegutstrom wird von dem Rücklaufboden 9 in Richtung des ersten Abschnitts 20 des Vorbereitungsbodens 8 gefördert, dessen Förderrichtung durch den Pfeil FR bezeichnet ist. Die jeweilige vertikale Fallstufe 25, 26 des Vorbereitungsbodens 8 wird von einem durch die Sauggebläseanordnung 12 generierten Luftstrom 27 aufwärtsgerichtet durchströmt. Die Rücklaufbodenfallstufe 17 wird durch die erste Fallstufe 25 optimal mit dem Luftstrom 27 beaufschlagt, wodurch bereits hier eine Verbesserung der Entmischung des von dem Rücklaufboden 9 auf den ersten Abschnitt 20 des Vorbereitungsbodens 8 fallenden Erntegutes erreicht wird.

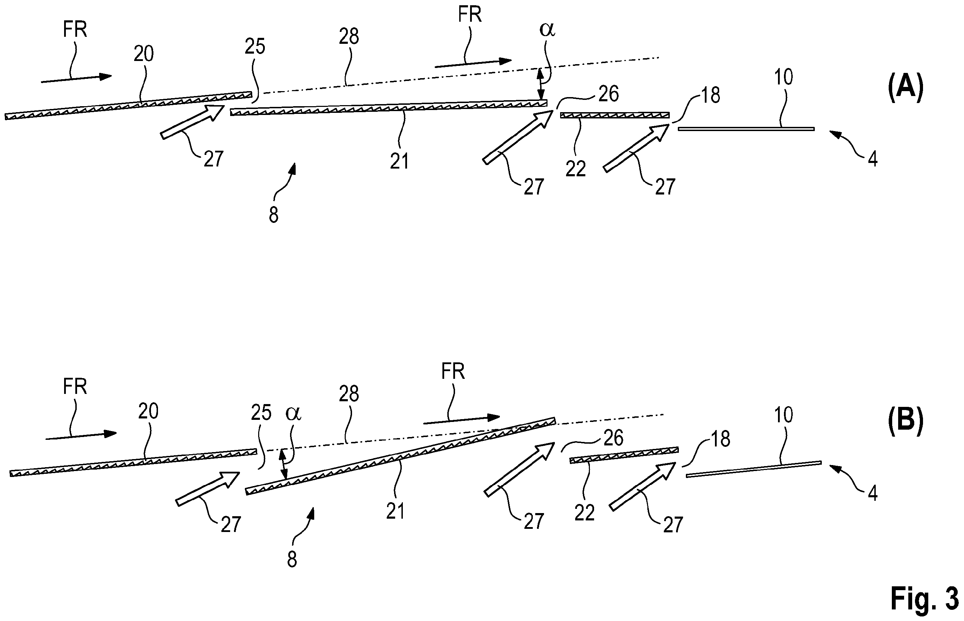

In Fig. 3 ist schematisch eine Seitenansicht der Abschnitte 20, 21, 22 des Vorbereitungsbodens 8 in einer ersten Anordnung gemäß Ansicht (A) sowie in einer zweiten Anordnung gemäß Ansicht (B) dargestellt. Mit Bezugszeichen 28 ist eine Hilfslinie bezeichnet, die eine gedachte Verlängerung des ersten Abschnitts 20 in dessen Längsrichtung darstellt. Der zweite Abschnitt 21 schließt mit dem ersten Abschnitt 20 einen Winkel α ein, wobei der zweite Abschnitt 21 in Längsrichtung des Vorbereitungsbodens 8 abfallend angeordnet ist.

In Ansicht (B) der Fig. 3 ist eine alternative Ausführungsform der Anordnung des zweiten Abschnitts 21 des Vorbereitungsbodens 8 dargestellt. Der zweite Abschnitt 21 schließt mit dem ersten Abschnitt 20 einen Winkel α ein, wobei der zweite Abschnitt 21 in Längsrichtung aufsteigend angeordnet ist. Mittels der unterschiedlichen Größenordnung des Winkels α lässt sich die Höhe der ersten Fallstufe 25 und der zweiten Fallstufe 26 variieren.

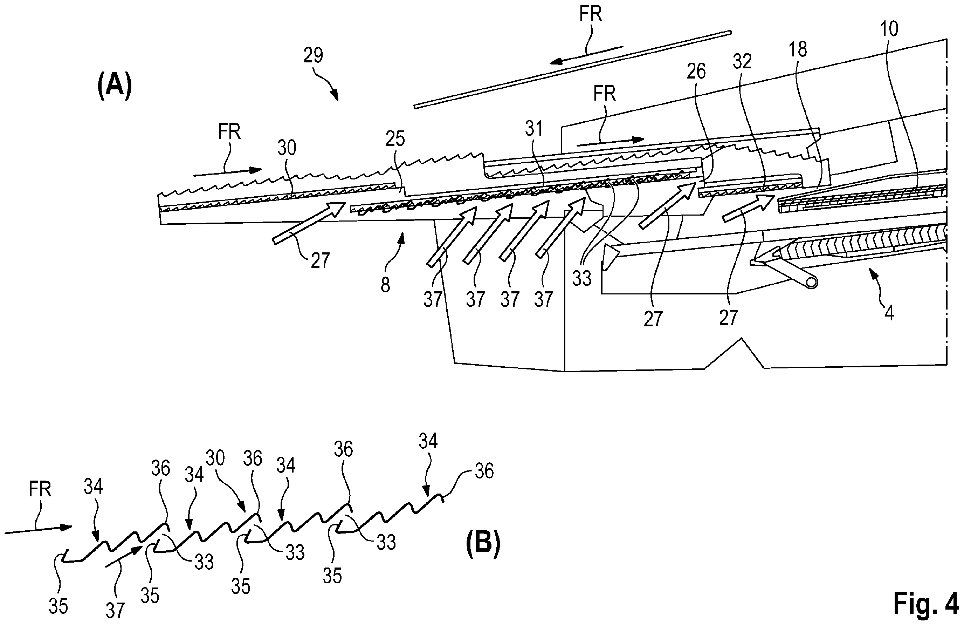

Fig. 4 zeigt in Ansicht (A) eine schematische Darstellung einer perspektivischen Teilansicht eines Vorbereitungsbodens 29 gemäß einer zweiten Ausführungsform und in Ansicht (B) schematisch eine Seitenansicht eines zweiten Abschnitts 31 des Vorbereitungsbodens 29 gemäß Ansicht (A). Der Vorbereitungsboden 29 entspricht in seinem grundsätzlichen Aufbau dem Vorbereitungsboden 8 gemäß den vorangehenden Ausführungsformen, so dass für identische bzw. funktionsgleiche Komponenten die bereits verwendeten Bezugszeichen beibehalten werden.

Der Vorbereitungsboden 29 unterscheidet sich von dem Vorbereitungsboden 8 dadurch, dass zumindest einer der drei Abschnitte 30, 31, 32, ein erster Abschnitt 30, ein zweiter Abschnitt 31 und/oder ein dritter Abschnitt 32, eine abschnittsweise luftdurchlässige Oberfläche aufweist. Hierzu ist zumindest einer der Abschnitte 30, 31 ,32 des Vorbereitungsbodens 29 mit Durchgangsöffnungen 33 versehen. Bevorzugt ist der zweite Abschnitt 31 mit solchen Durchgangsöffnungen 33 versehen, durch die ein zusätzlicher Luftstrom 37 von der der Reinigungsvorrichtung 4 nachgeordneten Sauggebläseanordnung 12 angesaugt wird. Dieser zusätzliche Luftstrom 37 trägt zur Entmischung des Ernteguts auf der Oberfläche des zweiten Abschnitts 31 bei. Die Durchgangsöffnungen 33 weisen eine Öffnungsweite auf, welche einen Durchtritt von Erntegut verhindert. Hierzu können die Durchgangsöffnungen 33 im einfachsten Fall als- nicht dargestellte - Durchbohrungen ausgeführt sein.

In Ansicht (B) ist eine Ausführungsform des zweiten Abschnitts des Vorbereitungsbodens 29 gezeigt, wobei die Durchgangsöffnungen 33 durch eine labyrinthartige Ausgestaltung von die Durchgangsöffnungen 33 begrenzenden Wandabschnitten 34 des zweiten Abschnitts 31 des Vorbereitungsbodens 29 ausgebildet sind. Hierzu weisen die geneigt angeordneten stufen- oder wellenförmige Wandabschnitte 34 eine in Förderrichtung ansteigende Orientierung auf. Ein Endbereich 36 eines vorangehenden Wandabschnittes 34 überlappt einen Anfangsbereich 35 eines in Förderrichtung FR gesehen nachfolgenden Wandabschnitts 34 abschnittsweise in horizontaler und vertikaler Richtung.

Ein Wesentlicher Vorteil der vorstehend in den Fig. 1 bis 4 beschriebenen Ausführungsformen des Vorbereitungsbodens 8 bzw. 29 besteht darin, dass eine Vergrößerung des Prozessraumes der Reinigungsvorrichtung erreicht wird. Dies wird durch auf bereits auf dem Vorbereitungsboden 8 bzw. 29 stattfindende mechanische und pneumatische Anregung erreicht. Bevorzugt liegt ein Längenverhältnis der Erstreckung des ersten Abschnitts 20 bzw. 30 zum zweiten Abschnitt 21 bzw. 31 in Längsrichtung des Vorbereitungsbodens 9 bzw. 29, zwischen denen sich eine vertikale Fallstufe ausbildet, im Bereich zwischen 0,4 und 0,7. Die Größenordnung der Erstreckung des ersten Abschnitts 20 bzw. 30 bezogen auf den zweiten Abschnitt 21 bzw. 31 in Längsrichtung des Vorbereitungsbodens 9 bzw. 29 liegt zwischen 40% und 70%. Ein Längenverhältnis der vertikalen Erstreckung der ersten Fallstufe 25 zu der zweiten Fallstufe 26 liegt vorzugsweise im Bereich zwischen 0,4 und 0,7. Die Größenordnung der vertikalen Erstreckung der ersten Fallstufe 25 bezogen auf die zweite Fallstufe 26 liegt zwischen 40% und 70%.

**Bezugszeichenliste**

| | | | |
|---|---|---|---|
| 1 | Mähdrescher | 31 | Zweiter Abschnitt |
| 2 | Dreschvorrichtung | 32 | Dritter Abschnitt |
| 3 | Abscheidevorrichtung | 33 | Durchgangsöffnung |
| 4 | Reinigungsvorrichtung | 34 | Wandabschnitt |
| 5 | Häckselvorrichtung | 35 | Anfangsbereich |
| 6 | Verteilvorrichtung | 36 | Endbereich |
| 7 | Maschinengehäuse | 37 | Luftstrom |
| 8 | Vorbereitungsboden | | |
| 9 | Rücklaufboden | α | Winkel |
| 10 | Obersieb | FR | Förderrichtung |
| 11 | Saugluftstrom | | |
| 12 | Sauggebläseanordnung | | |
| 13 | Gehäuse | | |
| 14 | Kanalsegment | | |
| 15 | Hebelanordnung | | |
| 16 | Eintrittsöffnung | | |
| 17 | Rücklaufbodenfallstufe | | |
| 18 | Reinigungsfallstufe | | |
| 19 | Rahmen | | |
| 20 | Erster Abschnitt | | |
| 21 | Zweiter Abschnitt | | |
| 22 | Dritter Abschnitt | | |
| 23 | Leitblech | | |
| 24 | Rechenförmiges Element | | |
| 25 | Erste Fallstufe | | |
| 26 | Zweite Fallstufe | | |
| 27 | Luftstrom | | |
| 28 | Hilfslinie | | |
| 29 | Vorbereitungsboden | | |
| 30 | Erster Abschnitt | | |

## Patentansprüche

1. Selbstfahrender Mähdrescher (1), umfassend eine Dreschvorrichtung (2), eine Abscheidevorrichtung (3), welche jeweils einen Erntegutstrom abscheiden, der auf einen Vorbereitungsboden (8, 29) gelangt, sowie eine Reinigungsvorrichtung (4) mit zumindest einer dem Vorbereitungsboden (8, 29) nachgeordneten und unterhalb des Vorbereitungsbodens (8, 29) liegenden Siebebene, wobei der Reinigungsvorrichtung (4) eine Gebläseanordnung zugeordnet ist, wobei der Vorbereitungsboden (8, 29) in mehrere, vertikal versetzt angeordnete Abschnitte (20, 21, 22; 30, 31, 32) unterteilt ist, **dadurch gekennzeichnet, dass** sich zwischen zwei aufeinanderfolgenden Abschnitten (20, 21, 22; 30, 31, 32) des Vorbereitungsbodens (8, 29) eine vertikale Fallstufe (25, 26, 27) ausbildet, die jeweils von einem von einer als Sauggebläseanordnung (12) ausgeführten Gebläseanordnung, die der Reinigungsvorrichtung (4) nachgeordnet ist, generierten Luftstrom (27) aufwärtsgerichtet durchströmt werden.

2. Mähdrescher (1) nach Anspruch 1, **dadurch gekennzeichnet, dass** der Vorbereitungsboden (8, 29) in zumindest drei hintereinander angeordnete Abschnitte (20, 21, 22; 30, 31, 32) unterteilt ist, wobei sich zwischen einem ersten Abschnitt (20, 30) und einem tiefer angeordneten zweiten Abschnitt (21, 31) eine erste vertikale Fallstufe (25) und zwischen dem zweiten Abschnitt (21, 31) und einem tiefer angeordneten dritten Abschnitt (22, 32) eine zweite vertikale Fallstufe (26) ausbilden.

3. Mähdrescher (1) nach Anspruch 2, **dadurch gekennzeichnet, dass** die erste vertikale Fallstufe (25) im Übergabebereich eines unterhalb der Abscheidevorrichtung (3) und oberhalb des Vorbereitungsbodens (8, 29) angeordneten Rücklaufbodens (9) angeordnet ist.

4. Mähdrescher (1) nach Anspruch 1 bis 3, **dadurch gekennzeichnet, dass** zumindest ein Abschnitt (31) des Vorbereitungsbodens (8, 29) mit Durchgangsöffnungen (33) versehen ist.

5. Mähdrescher (1) nach Anspruch 4, **dadurch gekennzeichnet, dass** die Durchgangsöffnungen (33) eine Öffnungsweite aufweisen, welche einen Durchtritt von Erntegut verhindert.

6. Mähdrescher (1) nach Anspruch 4, **dadurch gekennzeichnet, dass** die Durchgangsöffnungen (33) durch eine labyrinthartige Anordnung von die Durchgangsöffnungen begrenzenden Wandabschnitten (34) des zumindest einen Abschnitts (31) des Vorbereitungsbodens (29) ausgebildet sind.

7. Mähdrescher (1) nach einem der Ansprüche 2 bis , **dadurch gekennzeichnet, dass** ein Längenverhältnis der Erstreckung des ersten Abschnitts (20, 30) zum zweiten Abschnitt (21, 31) in Längsrichtung des Vorbereitungsbodens (8, 29), zwischen denen sich die erste vertikale Fallstufe (25) ausbildet, im Bereich zwischen 0,4 und 0,7 liegt.

8. Mähdrescher (1) nach einem der Ansprüche 2 bis 7, **dadurch gekennzeichnet, dass** ein Längenverhältnis der vertikalen Erstreckung der ersten Fallstufe (25) zu der zweiten Fallstufe (26) im Bereich zwischen 0,4 und 0,7 liegt.

9. Mähdrescher (1) nach einem der Ansprüche 2 bis 8, **dadurch gekennzeichnet, dass** der zweite Abschnitt (21, 31) mit dem ersten Abschnitt (20, 30) einen Winkel (a) einschließt, wobei der Winkel (a) gleich oder ungleich Null Grad (0°) ist.

10. Mähdrescher (1) nach einem der Ansprüche 2 bis 9, **dadurch gekennzeichnet, dass** der zweite Abschnitt (21, 31) den ersten Abschnitt (20, 30) in Längsrichtung abschnittsweise überlappt.

11. Mähdrescher (1) nach einem der Ansprüche 1 bis 10, **dadurch gekennzeichnet, dass** unterhalb der Abscheidevorrichtung (3) ein im Wesentlichen parallel zu dieser verlaufender Rücklaufboden (9) angeordnet ist, der an seinem dem Vorbereitungsboden (8) zugewandten Ende unter einem Winkel größer 0° zur Längsachse der Abscheidevorrichtung geneigt ist.

12. Mähdrescher (1) nach einem der Ansprüche 1 bis 11, **dadurch gekennzeichnet, dass** die Dreschvorrichtung (2) nach dem Tangentialflussprinzip arbeitet und die Abscheidevorrichtung (3) als ein Hordenschüttler oder zumindest ein nach dem Axialflussprinzip arbeitender Axialtrennrotor ausgebildet ist.

13. Mähdrescher (1) nach einem der Ansprüche 1 bis 11, **dadurch gekennzeichnet, dass** die Dreschvorrichtung (2) und die Abscheidevorrichtung (3) als zumindest ein nach dem Axialflussprinzip arbeitender Axialdresch-Trennrotor ausgebildet sind.

## Claims

1. A self-propelled combine harvester (1), comprising a threshing device (2), a separating device (3) which respectively separate a flow of harvested material which arrives at a grain pan (8, 29), as well as a cleaning device (4) with at least one sieve stage which lies downstream of the grain pan (8, 29) and below the grain pan (8, 29), wherein a fan assembly is associated with the cleaning device (4), wherein the grain pan (8, 29) is divided into a plurality of sections (20, 21, 22; 30, 31, 32) which are disposed in a vertically offset configuration, **characterized in that** a vertical drop step (25, 26, 27) is formed between two successive sections (20, 21, 22; 30, 31, 32) of the grain pan (8, 29) through which drop step a respective upwardly directed stream of air (27) flows which is generated by a fan assembly which is configured as a suction fan assembly (12) which is disposed downstream of the cleaning device (4).

2. The combine harvester (1) according to claim 1, **characterized in that** the grain pan (8, 29) is divided into at least three sections (20, 21, 22; 30, 31, 32) which are disposed one behind the other, wherein a first vertical drop step (25) is disposed between a first section (20, 30) and a second section (21, 31) which is lower in disposition and a second vertical drop step (26) is disposed between the second section (21, 31) and a third section (22, 32) which is lower in disposition.

3. The combine harvester (1) according to claim 2, **characterized in that** the first vertical drop step (25) is disposed in the transfer region of a returns pan (9) which is disposed below the separating device (3) and above the grain pan (8, 29).

4. The combine harvester (1) according to claims 1 to 3, **characterized in that** at least one section (31) of the grain pan (8, 29) is provided with through openings (33).

5. The combine harvester (1) according to claim 4, **characterized in that** the width of the through openings (33) are such as to prevent the passage of harvested material.

6. The combine harvester (1) according to claim 4, **characterized in that** the through openings (33) are formed by a labyrinthine arrangement of wall sections (34) of the at least one section (31) of the grain pan (29) which delimit the through openings.

7. The combine harvester (1) according to claim one of claims 2 to 6, **characterized in that** a ratio of the length of the extent of the first section (20, 30) to the second section (21, 31) in the longitudinal direction of the grain pan (8, 29) between which the first vertical drop step (25) is formed is in the range between 0.4 and 0.7.

8. The combine harvester (1) according to one of claims 2 to 7, **characterized in that** a ratio of the length of the vertical extent of the first drop step (25) to the second drop step (26) is in the range between 0.4 and 0.7.

9. The combine harvester (1) according to one of claims 2 to 8, **characterized in that** the second section (21, 31) and the first section (20, 30) include an angle (a), wherein the angle (a) is equal to or not equal to zero degrees (0°).

10. The combine harvester (1) according to one of claims 2 to 9, **characterized in that** the second section (21, 31) overlaps the first section (20, 30) in sections in the longitudinal direction.

11. The combine harvester (1) according to one of claims 1 to 10, **characterized in that** a returns pan (9) is disposed below the separating device (3) and runs substantially parallel thereto, the end of the returns pan facing the grain pan (8) being inclined by an angle of more than 0° to the longitudinal axis of the separating device.

12. The combine harvester (1) according to one of claims 1 to 11, **characterized in that** the threshing device (2) operates in accordance with the tangential flow principle and the separating device (3) is configured as a straw walker or at least as an axial separating rotor operating in accordance with the axial flow principle.

13. The combine harvester (1) according to one of claims 1 to 11, **characterized in that** the threshing device (2) and the separating device (3) are configured as at least one axial flow threshing and separating rotor operating in accordance with the axial flow principle.

## Revendications

1. Moissonneuse-batteuse automotrice (1), comprenant un dispositif de battage (2), un dispositif de séparation (3), lequel sépare respectivement un flux de produit récolté, qui parvient sur un fond de préparation (8, 29), ainsi qu'un dispositif de nettoyage (4) avec au moins un niveau de criblage disposé en aval du fond de préparation (8, 29) et situé sous le fond de préparation (8, 29), dans laquelle un ensemble formant ventilateur est associé au dispositif de nettoyage (4), dans laquelle le fond de préparation (8, 29) est divisé en plusieurs sections (20, 21, 22 ; 30, 31, 32) disposées de manière décalée verticalement, **caractérisée en ce que** se forme, entre deux sections (20, 21, 22 ; 30, 31, 32) se suivant l'une l'autre du fond de préparation (8, 29), un étage de chute (25, 26, 27) vertical, qui est traversé de manière ascendante respectivement par un flux d'air (27) généré par un ensemble formant ventilateur réalisé en tant qu'ensemble formant ventilateur aspirant (12), qui est disposé en aval du dispositif de nettoyage (4).

2. Moissonneuse-batteuse (1) selon la revendication 1, **caractérisée en ce que** le fond de préparation (8, 29) est divisé en au moins trois sections (20, 21, 22 ; 30, 31, 32) disposées les unes derrière les autres, dans laquelle une première chute (25) verticale se forme entre une première section (20, 30) et une deuxième section (21, 31) disposée plus bas et une deuxième chute (26) verticale se forme entre la deuxième section (21, 31) et une troisième section (22, 32) disposée plus bas.

3. Moissonneuse-batteuse (1) selon la revendication 2, **caractérisée en ce que** le premier étage de chute (25) vertical est disposé dans la zone de transfert d'un fond de refoulement (9) disposé sous le dispositif de séparation (3) et au-dessus du fond de préparation (8, 29).

4. Moissonneuse-batteuse (1) selon la revendication 1 à 3, **caractérisée en ce qu'**au moins une section (31) du fond de préparation (8, 29) est pourvue d'ouvertures de passage (33) .

5. Moissonneuse-batteuse (1) selon la revendication 4, **caractérisée en ce que** les ouvertures de passage (33) présentent une largeur d'ouverture, laquelle empêche un passage du produit récolté.

6. Moissonneuse-batteuse (1) selon la revendication 4, **caractérisée en ce que** les ouvertures de passage (33) sont réalisées par un ensemble de type labyrinthe de sections de paroi (34), délimitant les ouvertures de passage, de l'au moins une section (31) du fond de préparation (29).

7. Moissonneuse-batteuse (1) selon l'une quelconque des revendications 2 à 6, **caractérisée en ce qu'**un rapport de longueur entre l'extension de la première section (20, 30) et la deuxième section (21, 31), entre lesquelles le premier étage de chute (25) vertical se forme, est compris dans la plage entre 0,4 à et 0,7 dans le sens longitudinal du fond de préparation (8, 29).

8. Moissonneuse-batteuse (1) selon l'une quelconque des revendications 2 à 7, **caractérisée en ce qu'**un rapport de longueur entre l'extension verticale du premier étage de chute (25) et le deuxième étage de chute (26) est compris dans la plage entre 0,4 et 0,7.

9. Moissonneuse-batteuse (1) selon l'une quelconque des revendications 2 à 8, **caractérisée en ce que** la deuxième section (21, 31) forme avec la première section (20, 30) un angle (α), dans laquelle l'angle (α) est égal à ou différent de zéro degré (0°).

10. Moissonneuse-batteuse (1) selon l'une quelconque des revendications 2 à 9, **caractérisée en ce que** la deuxième section (21, 31) chevauche par endroits la première section (20, 30) dans le sens longitudinal.

11. Moissonneuse-batteuse (1) selon l'une quelconque des revendications 1 à 10, **caractérisée en ce qu'**est disposé sous le dispositif de séparation (3) un fond de refoulement (9) s'étendant de manière sensiblement parallèle par rapport à ce dernier, qui est incliné, sur son extrémité tournée vers le fond de préparation (8), selon un angle supérieur à 0° par rapport à l'axe longitudinal du dispositif de séparation.

12. Moissonneuse-batteuse (1) selon l'une quelconque des revendications 1 à 11, **caractérisée en ce que** le dispositif de battage (2) fonctionne selon le principe de flux tangentiel et le dispositif de séparation (3) est réalisé en tant qu'un secoueur de claies ou au moins en tant qu'un rotor de séparation axiale fonctionnant selon le principe de flux axial.

13. Moissonneuse-batteuse (1) selon l'une quelconque des revendications 1 à 11, **caractérisée en ce que** le dispositif de battage (2) et le dispositif de séparation (3) sont réalisés en tant qu'au moins un rotor de séparation de battage axial fonctionnant selon le principe de flux axial.
